# EUROPEAN PATENT SPECIFICATION

(11) **EP 4 343 222 B1**
(45) Date of publication and mention of the grant of the patent: **19.03.2025**
(21) Application number: 23198943.5
(22) Date of filing: 21.09.2023
(51) Int. Cl.: F24F 12/00, F24F 13/20, F24F 13/22

(54) **DUAL FLOW VENTILATION UNIT WITH MULTIPLE FUNCTIONING ORIENTATIONS**
DOPPELFLUSS-LÜFTUNGSEINHEIT MIT MEHREREN FUNKTIONSAUSRICHTUNGEN
UNITÉ DE VENTILATION À DOUBLE FLUX AVEC DE MULTIPLES ORIENTATIONS DE FONCTIONNEMENT

(30) Priority: 21.09.2022 NL 2033092
(43) Date of publication of application: 27.03.2024
(73) Proprietor: Groupe Atlantic Nederland B.V., 3905 PE Veenendaal (NL)
(72) Inventor: TUIJP, Bram, AMERSFOORT (NL); KOENDERS, René, GENNEP, LIMBURG (NL); BRUIS, Sander, EDE (NL); WESTERBEEK, Maarten, ZEIST (NL); VAN KESSEL, Britt, EERBEEK (NL)
(74) Representative: Ipsilon

(56) References cited:
- WO-A1-2017/141443
- WO-A1-2019/115730
- KR-B1- 101 340 835
- KR-B1- 102 058 287

## Description

The invention concerns a dual flow ventilation system for a room. Particularly, the invention concerns a dual flow ventilation unit which can be operated with different orientations.

A dual ventilation system aims at extracting exhaust air from one or more rooms, for example from a house or a building, and blowing fresh air into said rooms to renew and thus purify the air of the rooms. The dual ventilation system comprises a fresh air circuit and an exhaust air circuit.

The dual ventilation system also comprises a thermal exchanger disposed at a junction between the exhaust and fresh air circuits to heat up the fresh air blown into the rooms with the exhaust air extracted from the room. This thermal exchanger is used when the temperature of the outside fresh would interfere with the comfort of the users.

A dual ventilation system comprises a dual flow ventilation unit having a casing connected to both fresh and exhaust air circuits to form a junction between these two circuits within the casing. A thermal exchanger is disposed within the casing at this junction.

Condensation may occur on the walls of the thermal exchanger when fresh or exhaust air contains water vapor. These condensates have to be evacuated from the casing to ensure the working of the ventilation system.

To evacuate these condensates, dual flow ventilation units generally comprise a drainage tray disposed inside the casing and below the thermal exchanger to collect these condensates by gravity. A drainage duct is connected to this drainage tray to evacuate these condensates. Due to the collection of the condensates by gravity, the casing must be oriented with the drainage tray disposed at the bottom of the casing.

For the installation of a dual flow ventilation unit in a building, air ducts of the exhaust and fresh air circuits have to be connected to the unit, one inlet and one outlet for each air circuit. These air ducts may be already positioned such that the connection of the dual flow ventilation unit to the fresh and exhaust air circuits may be difficult because the orientation of the casing is already set with the drainage tray disposed at the bottom of the casing.

Some existing dual flow ventilation unit may include the possibility to readdress the air inlets and outlets of the unit to make it correspond to the actual position of the preinstalled air ducts. However, the unit must be adapted to this swap, notably by reprogramming the controller of the unit for proper operation of the unit. This swap is therefore very constraining for the installer and requires advanced knowledge.

KR 101 340 835 discloses a ventilation unit upon which the preamble of claim 1 is based.

There is a need for an improved dual flow ventilation unit allowing a more flexible installation, particularly for the connection to fresh and exhaust air circuits.

To solve this problem, the invention provides a dual-flow ventilation unit for extracting exhaust air from at least one room and blowing fresh air into said at least one room, said dual-flow ventilation unit having a casing comprising two main walls opposite each other and a plurality of lateral walls extending between said two main walls, said casing comprising:
- a thermal exchanger,
- a first and a second flow circuits extending at least partially through the thermal exchanger to transfer heat from air flowing through one of said first and second flow circuits to air flowing through the other one among said first and second flow circuits, each of the first and second flow circuits comprising an air inlet and an air outlet formed through one lateral wall among the plurality of lateral walls,
- ventilating means for moving air through said first and second flow circuits,
- a drainage collector for collecting by gravity water generated by condensation on the thermal exchanger and conducting said water outside the casing, said drainage collector being removably fixed to one among said main walls,
characterized in that each of said main walls comprises a receiving slot configured to receive said drainage collector so that said drainage collector is configured to be selectively fixed to either one of said main walls depending on the orientation of the casing.

Providing each of the main walls, i.e. each opposite side of the casing, with a receiving slot associated with a removable drainage collector allows to fix the removable collector to either of the two opposite main walls. The casing may be thus disposed in at least two orientations: a first orientation wherein a first main wall is facing downwards and a second position wherein a second main wall opposite to the first one is facing downwards. In other words, the orientation of the casing may be reversed to lean on either of the main walls while ensuring that the condensate generated onto the thermal exchanger may be collected into the drainage collector by gravity.

This ability to reverse the orientation of the casing onto either of the main walls improve the number of connecting configurations of the casing to the fresh and exhaust air circuits. The installation of the dual flow ventilation unit is therefore made more flexible.

According to an embodiment of the dual flow ventilation unit, said drainage collector is a cover forming at least a part of an external surface of the casing when received into said receiving slot.

According to an embodiment of the dual flow ventilation unit, each of said receiving slots forms a through-hole facing said thermal exchanger in a direction perpendicular to said main walls, said drainage collector being disposed within said through-hole when received into said receiving slot, said through-hole having dimensions allowing the thermal exchanger to be removed through said through-hole.

According to an embodiment of the dual flow ventilation unit, said drainage collector comprises a water retention cavity extending below the thermal exchanger when the casing is oriented with drainage collector facing downwards, the drainage collector further comprising a drainage duct extending along the main wall onto which the drainage collector is fixed and is in fluid communication with the water retention cavity to conduct water near a lateral wall of the casing.

According to an embodiment of the dual flow ventilation unit, each of said main walls comprises a duct imprint to receive said drainage duct when said drainage collector is received within said receiving slot, said duct imprint extending from a central portion of the main wall towards a lateral wall of the casing.

According to an embodiment of the dual flow ventilation unit, said drainage collector comprises an internal surface in contact with said thermal exchanger to form an abutment for said thermal exchanger when said drainage collector is received within said receiving slot.

According to an embodiment of the dual flow ventilation unit, said drainage collector comprises air and water tightness means between said internal surface of the drainage collector and said thermal exchanger.

According to an embodiment of the dual flow ventilation unit, said drainage collector comprises air tightness means extending around the thermal exchanger when said drainage collector is received within the receiving slot.

According to an embodiment of the dual flow ventilation unit, said thermal exchanger comprises a fresh air entrance opening and a fresh air exit opening as well as an exhaust air entrance opening and an exhaust exit opening, said water retention cavity at least extending below the exhaust air exit opening of the thermal exchanger when the drainage collector is fixed to either one of said main walls.

According to an embodiment of the dual flow ventilation unit, at least one lateral wall of the casing comprising an additional drainage collector for collecting by gravity water generated by condensation on the thermal exchanger and conducting said water outside the casing.

According to an embodiment of the dual flow ventilation unit, said additional drainage collector is formed by a drainage through-hole within a lateral wall facing exhaust air exit opening of the thermal exchanger to allow water generated by condensation onto the thermal exchanger to flow by gravity through said drainage through-hole.

According to an embodiment of the dual flow ventilation unit, the drainage collector is configured to be secured to said receiving slot with one or more among: a screwing connection, a snap-fit connection or a close fit connection.

The invention also provides a method for installing a dual-flow ventilation unit according to any one of the preceding claims in a building comprising an exhaust air circuit and a fresh air circuit, comprising the steps of:
- determining the position of the exhaust and fresh air circuits,
- selecting one of the main walls of the casing to be oriented downwards depending on the position of the exhaust and fresh air circuits,
- fixing the drainage collector to the main wall selected to be oriented downwards.

According to an embodiment of the installing method, the drainage collector is already fixed to a main wall before the fixing step, said method comprising a step of removing the drainage collector from said main wall before the fixing step.
Figure 1 shows a perspective view of a casing from a dual flow ventilation unit, said casing comprising a first main wall with a drainage collector fixed thereto.
Figure 2 shows a perspective view of the casing of figure 1 with the drainage collector and the first main wall removed.
Figure 3 shows a perspective view of the casing of figure 1 with only the drainage collector removed.
Figure 4 shows a perspective view of the drainage collector of figure 1.
Figure 5 shows a perspective view of the drainage collector of figure 4 with air and water tightness means.
Figure 6 shows a perspective view of the drainage collector of figure 4 with a water retention cavity having a water guide.
Figure 7 shows a detail view of an additional drainage collector provided through a lateral wall of the casing.

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may embodied in a wide variety of contexts. Embodiments discussed herein are merely representative and do not limit the scope of the invention which is defined by the appending claims.

It will also be obvious to one skilled in the art that all the technical features that are defined relative to a process can be transposed, individually or in combination, to a device and conversely, all the technical features relative to a device can be transposed, individually or in combination, to a process.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements but is not limited to possessing only those one or more steps or elements.

The present invention provides a dual flow ventilation unit of a dual flow ventilation system according to claim1.

A dual flow ventilation system comprises an exhaust air circuit for extracting exhaust air from one or more rooms and a fresh air circuit for blowing fresh air to said one or more rooms. Each of said fresh and exhaust air circuits comprises an air duct extending from said one or more rooms to an outside area.

The fresh air and exhaust air circuits correspond to a first and a second air circuits.

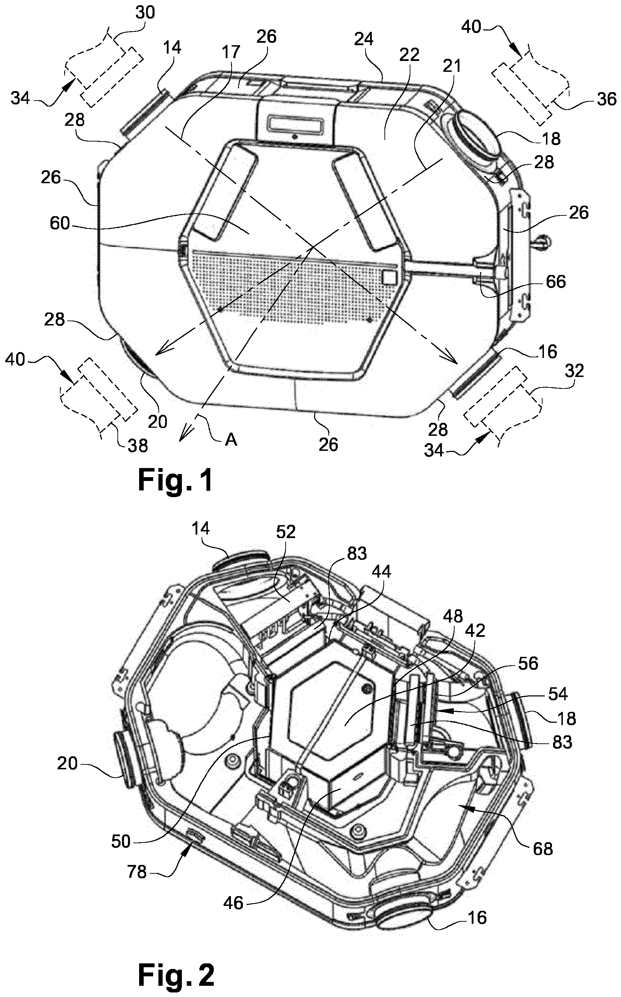

As shown on figure 1, the dual flow ventilation unit 10 comprises a casing 12 having a first 22 and a second 24 main walls facing each other and disposed at opposite sides of the casing. The casing 12 further comprises a plurality of lateral walls 26 extending between the first 22 and the second 24 main walls. The casing 12 defines an internal cavity 13 delimited by the first 22 and second 24 main walls as well as the lateral walls 26.

The casing 12 has three dimensions in space: a width, a length and a height with the length and the width perpendicular to the height. The casing 12 is substantially parallelepipedal with the main walls defining the length and the width and the lateral walls defining the height of the parallelepiped. Particularly, the casing 12 is preferably a perpendicular parallelepiped. The height of the casing 12 is preferably lower than each of the length and width so that the casing is essentially a flat parallelepiped.

In the preferred embodiment shown on figure 1, vertices of the parallelepiped formed by the casing are truncated when observed in a direction A perpendicular to the first 22 or the second 24 main walls. Hence, four sloping lateral walls 28 are formed at each vertex of the casing 12 when observed in said direction A perpendicular to the first 22 or the second 24 main walls.

The casing 12 comprises a fresh air inlet 14 and a fresh air outlet 16 in fluid communication with each other along a fresh air channel 17. The fresh air inlet 14 and outlet 16 are respectively configured to be connected to a first 30 and a second 32 air ducts of a fresh air circuit 34.

The casing 12 also comprises an exhaust air inlet 18 and an exhaust air outlet 20 in fluid communication with each other along an exhaust channel 21. The exhaust air inlet 18 and outlet 20 are respectively configured to be connected to a first 36 and a second 38 air ducts of an exhaust air circuit 40.

The fresh air inlet 14 and outlet 16 and the exhaust air inlet 18 and outlet 20 are formed on a lateral wall 26 so that the fresh air 17 and exhaust air 21 channels substantially extend perpendicularly to the direction A.

The fresh air inlet 14 and outlet 16 and the exhaust air inlet 18 and outlet 20 are disposed around the casing 12 such that the fresh air 17 and exhaust air 21 channels intersect at a central portion of the casing 12. This central portion is for example centered around the direction A. In this configuration, the fresh air 17 and exhaust air 21 channels extend to form an X, each end of the X corresponding to one of the fresh air inlet 14 and outlet 16 and the exhaust air inlet 18 and outlet 20.

In the preferred embodiment wherein the vertices of the casing 12 are truncated, each of the fresh air inlet 14 and outlet 16 and the exhaust air inlet 18 and outlet 20 is disposed at a sloping lateral wall 28.

As shown on figure 2, the casing 12 further comprises a thermal exchanger 42 disposed at the junction of the fresh 17 and exhaust 21 air channels. The thermal exchanger 42 is particularly disposed at the central portion of the casing 12. The thermal exchanger 42 and the fresh and exhaust air channels are disposed within said internal cavity 13 of the casing 12.

The thermal exchanger 42 comprises a fresh air entrance opening 44 and a fresh air exit opening 46 as well as an exhaust air entrance opening 48 and an exhaust exit opening 50. The fresh air channel 17 passes through the fresh air entrance opening 44 and the fresh air exit opening 46. The exhaust air channel 21 passes through the exhaust air entrance opening 48 and the exhaust exit opening 50.

The thermal exchanger 42 allows heat transfer between the exhaust air and the fresh air without mixing it. The thermal exchanger is for example a plate heat exchanger.

The dual flow ventilation unit 10 may further comprise an additional heating device 52 disposed in the fresh air channel 17. The additional heating device 52 is for example disposed between the fresh air inlet 16 and the fresh air entrance opening 44.

The dual flow ventilation unit 10 may also comprise a bypass device 54 allowing the exhaust air to bypass the thermal exchanger 42. The bypass device 54 comprises a movable flap 56 directing the exhaust air either through the thermal exchanger 42 or through a bypass channel 58 which is in fluid communication with the exhaust air outlet 20. Hence, the exhaust air does not flow through the thermal exchanger 42 when the thermal exchanger is bypassed. This bypass functionality allows not to heat the fresh air blown into the one or more rooms with the thermal exchanger 42 if the temperature inside said rooms is considered to be sufficient. It is particularly useful when the dual ventilation system is operated in summer.

The bypass channel 58 is preferably running along a peripheral portion of the casing 12, between one of the first 22 or second 24 main walls and the fresh air channel 17. The bypass channel 58 is distinct from and thus not in fluid communication with the fresh air channel 17.

The dual flow ventilation unit 10 comprises ventilating means for moving air through said fresh air 17 and exhaust air 21 channels. Ventilating means are preferably air fans disposed within said fresh air 17 and exhaust air 21 channels. In the embodiment shown on figure 2, a first air fan (not shown) is disposed between the exhaust air outlet 20 and the exhaust air exit opening 50. A second air fan (not shown) is disposed between the fresh air outlet 16 and the fresh air exit opening 46.

The dual flow ventilation unit 10 comprises a drainage collector 60 for collecting by gravity water generated by condensation on the thermal exchanger 42 as well as conducting said water outside the casing 12. The drainage collector 60 is disposed below the thermal exchanger 42 to be able to collect water by gravity.

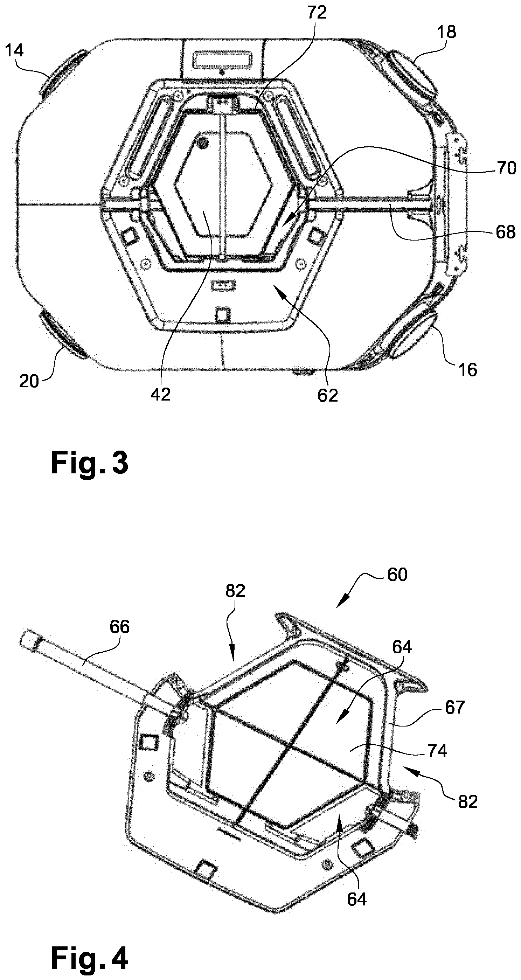

The drainage collector 60 is removably fixed to one of said first 22 and second 24 main walls. Particularly, as shown on figure 3, each of said first 22 and second 24 form a receiving slot 62 configured to receive said drainage collector 60. Hence, each of the first 22 and second 24 main walls is configured to receive said drainage collector 60 so that said drainage collector 60 is selectively fixed to either one of said first 22 and second 24 main walls depending on the desired orientation of the casing 12.

The drainage collector 60 is for example screwed to either the first 22 or the second 24 main walls.

Providing each of the first 22 and second 24 main walls, i.e. each opposite side of the casing 12, with the receiving slot 62 associated with a removable drainage collector 60 allows to fix the removable drainage collector 60 to either of the two opposite first 22 and second 24 main walls. The casing 12 may be thus disposed in at least two orientations: a first orientation wherein the first main wall 22 is facing downwards and a second position wherein a second main wall 24 opposite to the first one is facing downwards. In other words, the orientation of the casing 12 may be reversed to lean on either of the main walls while ensuring that the condensates generated onto the thermal exchanger 42 may be collected into the drainage collector 60 by gravity.

In these first and second orientations of the casing, the direction A extends vertically to allow water collection by gravity using the drainage collector 60.

This ability to reverse the orientation of the casing 12 onto either of the first 22 and second 24 main walls improves the number of connecting configurations of the casing to the fresh 34 and exhaust 40 air circuits. The installation of the dual flow ventilation unit 10 is therefore made more flexible.

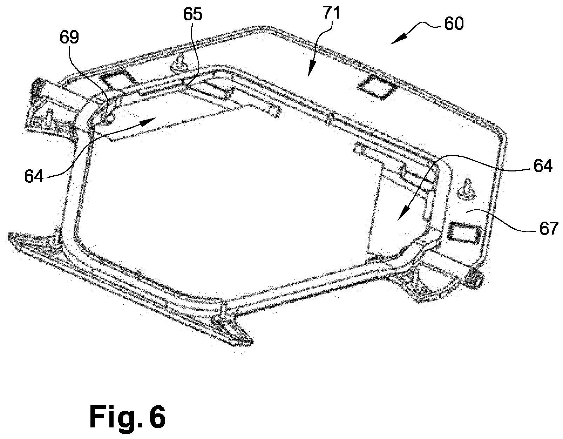

As shown on figures 4, 5 and 6, the drainage collector 60 comprises a water retention cavity 64 formed to extend below the thermal exchanger when the casing is oriented with drainage collector facing downwards. Particularly, the water retention cavity 64 may be formed to encompass at least two openings among the fresh air entrance 44 and exit 46 openings and the exhaust air entrance 48 and exit 50 openings when observed along the direction A. Most particularly, the water retention cavity 64 may be formed to encompass at least the fresh air exit opening 46 and the exhaust air exit opening 50 when observed along the direction A so that condensates generated onto said fresh air 46 and exhaust air 50 exit openings can be collected by gravity.

The water retention cavity 64 may also comprise water guide 65 which allows to prevent water from leaving the water retention cavity 64. In other words, the water guide 65 allows preventing water leakage. This water guide 65 comprises a ramp part extending perpendicularly from an internal surface 74 of the drainage collector 60 and a cover part extending from the ramp part along the internal surface 74. Hence, the water guide 65 has a L-shaped cross-section extending at partially around the water retention cavity 64. the water guide 65 preferably extends from a bottom part 71 of the water retention cavity 64 to near an exit orifice 69 intended to be in fluid communication with a drainage duct 66. The shape of the water guide 65 allows to guide water through the exit orifice 69 while preventing this water to leak inside the casing 12.

The drainage collector 60 may comprise two water retention cavities 64 disposed at opposite sides of the drainage collector 60. Each of these water retention cavities 64 is intended to be in fluid communication with a drainage duct 66. In doing so, the water drainage may operate whatever the side of the casing 12 orientated downwards. Each water retention cavity 64 may comprise a water guide 65 as described above.

The drainage collector 60 may further comprise a drainage duct 66 extending perpendicular to the direction A and in fluid communication with the water retention cavity 64 to allow condensates to evacuate the casing 12. The drainage duct 66 extends in a plane perpendicular to the direction A.

Each of said first 22 and second 24 main walls may comprise a duct imprint 68 to receive said drainage duct 66 when said drainage collector 60 is received within the receiving slot 62. The duct imprint 68 extends from the central portion of the casing 12 towards a lateral wall of the casing 12. The drainage duct 66 is preferably removably fixed to a collector body 67 of the drainage collector 60. The drainage duct 66 may be fixed to the duct imprint by friction.

In a preferred embodiment shown on figures 1, 3 and 4, the drainage collector 60 is a cover forming at least a part of an external surface of the casing when received into said receiving slot 62. In other words, the drainage collector 60 is at least partly in the form of a plate removably fixed to either the first 22 or the second 24 main walls.

Each receiving slot of the first 22 or the second 24 main walls forms a through-hole 70 intended to face said thermal exchanger 42 in the direction A. The drainage collector 60 is disposed within said through-hole 70 when received into said receiving slot 62. In other words, the through-hole 70 is covered by the drainage collector 60.

Said through-hole 70 preferably has dimensions allowing the thermal exchanger 42 to be removed through said through-hole 70. In other words, an edge 72 defining the outline of the through-hole 70 extends beyond the outline of the thermal exchanger 42 when observed along the direction A. It allows to ease extraction of the thermal exchanger 42, for example for the maintenance or replacement of the thermal exchanger 42.

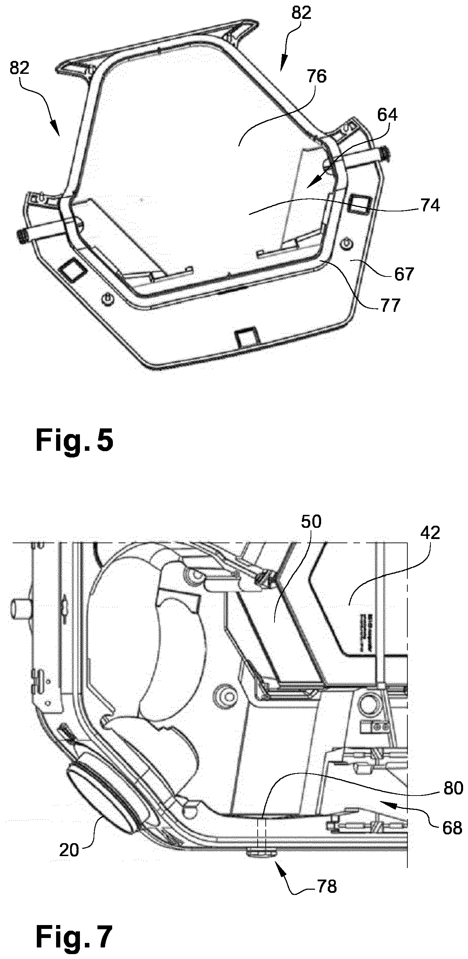

The drainage collector 60 comprises an internal surface 74 in contact with said thermal exchanger 42 to form an abutment for said thermal exchanger 42 when said drainage collector 60 is received within said receiving slot 62. This abutment is formed along the direction A, i.e. in a direction perpendicular to the first 22 and second 24 main walls. As shown on figure 5, the drainage collector 60 comprises air and water tightness means between said internal surface of the drainage collector 60 and said thermal exchanger 42. The air and water tightness means are for example in the form of a seal plate 76 intended to abut against the thermal exchanger 42 when said drainage collector 60 is received within said receiving slot 62.

The air and water tightness means allow to provide an air and water seal between the thermal exchanger 42 and the drainage collector 60. Furthermore, the air and water tightness means, e.g. the seal plate 76, also provide thermal insulation and noise reduction. The air and water means may be made with foam. The air and water tightness means preferably obturate the through-hole 70 when the drainage collector 60 is received within the receiving slot 62 to improve thermal insulation and noise reduction.

The drainage collector further comprises air tightness means between the collector body 67 and the first 22 or the second 24 main walls. Said air tightness means extend around the through-hole 70 when said drainage collector 60 is received within the receiving slot 62. Said air tightness means are for example a sealing strip 77. Said airtightness means extend around the water retention cavity 64.

Said dual flow ventilation unit 10 comprises an additional drainage collector 78 providing at a lateral wall 26 of the casing 12. This additional drainage collector 78 is configured to collect by gravity water generated by condensation on the thermal exchanger 42 and conduct said water outside the casing 12 when the casing 12 is in a third orientation where the direction A is horizontal. The additional drainage collector 78 allows to change the orientation of the direction A such that the installation of the casing 12 is further flexible.

As shown on figure 7, the additional drainage collector 78 is preferably formed by a drainage through-hole 80 within a lateral wall 26 facing the fresh air 46 and exhaust air 50 exit openings of the thermal exchanger 42 to allow water generated by condensation onto the thermal exchanger 42 to flow by gravity through said drainage through-hole 80.

The dual flow ventilation unit 10 further comprise a covering plate (not shown) intended to be fixed to one of the receiving slot 62 of the first 22 or second 24 main walls, particularly the main wall onto which the drainage collector is not fixed to. Hence, the covering plate allows to close the through-hole 70 of the receiving slot 70 when the drainage collector 60 is fixed to the other main wall. The covering plate is also configured to contact the thermal exchanger 42 when disposed within the receiving slot 62. This covering plate also comprises air and water tightness means to provide an air and water seal between the thermal exchanger 42 and the covering plate as well as between the covering plate and the receiving slot 62. These air and water tightness means may comprise a seal plate 76 dimensioned to both contact the thermal exchanger 42 when the covering plate is fixed to the receiving slot 62 and contact the receiving slot 62.

The drainage collector 60 may comprises two cut-out portions 82 configured to each face an air filter 83 disposed through the fresh air 17 and exhaust air 21 channels. These cut-out portions 82 allows to remove these air filters 83 without removing one of the first 22 and second 24 main walls or the drainage collector 60. Said cut-out portions 82 are dimensioned and positioned so that an air filter 83 can be removed from the casing 12 through the corresponding cut-out portion 82 without removing the drainage collector 60. The maintenance of the air filters 83 is thus facilitated. One air filter is preferably disposed between the fresh air inlet 14 and the fresh air entrance opening 44 of the thermal exchanger 42. Another air filter is preferably disposed between the exhaust air inlet 18 and the exhaust air entrance opening48 of the thermal exchanger 42.

A method for is also provided for installing the dual-flow ventilation unit 10 in a local or a building comprising an exhaust air circuit 40 and a fresh air circuit 34. Said method comprises a step of determining the position of the exhaust 40 and fresh air 34 circuits. Particularly, the position of the first 30 and second 32 air ducts of the fresh air circuit 34 and the first 36 and second 38 air ducts of the exhaust air circuit 40.

Then, the orientation of the casing 12 is determined depending on the position of the exhaust 40 and fresh 34 air circuits. Particularly, the orientation of the casing 12 is determined among the first orientation, wherein the first main wall 24 is facing downwards, the second orientation, wherein the second main wall 24 is facing downwards, and the third orientation wherein the lateral wall 26 comprising the additional drainage collector 78 is facing downwards.

The orientation is preferably determined so that all or as many inlets and outlets of the casing as possible can be easily connected to the air ducts of the exhaust 40 and fresh 34 air circuits. For example, if the first air duct 30 of the fresh air circuit 34 is short or not sufficiently accessible, the installer may choose an orientation of the casing 12 allowing to bring the fresh air inlet 14 closer to said first air duct 30. In other example, the installer may determine that the space available in the local where the casing 12 is installed requires that the casing 12 is installed vertically, i.e. with the direction A extending horizontally.

The casing 12 may further comprise fastening means to fasten the casing to a support or a wall. In the first and second orientation, the casing 12 may lie onto the floor and in the third orientation the casing 12 may be fixed to a wall.

Once the orientation of the casing 12 is determined, the drainage collector 60 is fixed to the receiving slot 62 of the main wall intended to face downwards. If the drainage collector 60 is already fixed onto a receiving slot 62, both the covering plate and the drainage collector 60 are removed from the respective receiving slots 62. The covering plate and the drainage collector 60 are interchanged to fix the drainage collector 60 onto the main wall intended to face downwards. The covering plate is fixed onto the opposite main wall.

## Claims

1. Dual-flow ventilation unit (10) for extracting exhaust air from at least one room and blowing fresh air into said at least one room, said dual-flow ventilation unit (10) having a casing (12) comprising two main walls (22, 24) opposite each other and a plurality of lateral walls (26, 28) extending between said two main walls, said casing comprising:
- a thermal exchanger (42),
- a first (17) and a second (21) flow circuits extending at least partially through the thermal exchanger (42) to transfer heat from air flowing through one of said first (17) and second (21) flow circuits to air flowing through the other one among said first (17) and second (21) flow circuits, each of the first (17) and second (21) flow circuits comprising an air inlet and an air outlet formed through one lateral wall (28) among the plurality of lateral walls (26, 28),
- ventilating means for moving air through said first and second flow circuits,
- a drainage collector (60) for collecting by gravity water generated by condensation on the thermal exchanger (42) and conducting said water outside the casing (12), said drainage collector (60) being removably fixed to one among said main walls (22, 24),
**characterized in that** each of said main walls (22, 24) comprises a receiving slot (62) configured to receive said drainage collector (60) so that said drainage collector (60) is configured to be selectively fixed to either one of said main walls (22, 24) depending on the orientation of the casing (12).

2. Dual flow ventilation unit (10) according to claim 1, wherein said drainage collector (60) is a cover forming at least a part of an external surface of the casing (12) when received into said receiving slot (62).

3. Dual flow ventilation unit (10) according to claim 2, wherein each of said receiving slots (62) forms a through-hole (70) facing said thermal exchanger (42) in a direction perpendicular to said main walls (22, 24), said drainage collector (60) being disposed within said through-hole (70) when received into said receiving slot (62), said through-hole (70) having dimensions allowing the thermal exchanger (42) to be removed through said through-hole (70).

4. Dual flow ventilation unit (10) according to any one of the preceding claims,
wherein said drainage collector (60) comprises a water retention cavity (64) extending below the thermal exchanger (42) when the casing (12) is oriented with the drainage collector (60) facing downwards, the drainage collector (60) further comprising a drainage duct (66) extending along the main wall (22, 24) onto which the drainage collector (60) is fixed and is in fluid communication with the water retention cavity (64) to conduct water near a lateral wall (26) of the casing (12).

5. Dual flow ventilation unit (10) according to claim 4, wherein each of said main walls (22, 24) comprises a duct imprint (68) to receive said drainage duct (66) when said drainage collector (60) is received within said receiving slot (62), said duct imprint (68) extending from a central portion of the casing (12) towards a lateral wall (26) of the casing.

6. Dual flow ventilation unit (10) according to any one of the preceding claims,
wherein said drainage collector (60) comprises an internal surface (74) in contact with said thermal exchanger (42) to form an abutment for said thermal exchanger (42) when said drainage collector (60) is received within said receiving slot (62).

7. Dual flow ventilation unit according to claim 6, wherein said drainage collector comprises air and water tightness means (76) between said internal surface (74) of the drainage collector (60) and said thermal exchanger (42).

8. Dual flow ventilation system according claim 6 or 7 in combination with claim 3,
wherein said drainage collector (60) comprises air tightness means (77) extending around the through-hole (70) when said drainage collector is received within the receiving slot.

9. Dual flow ventilation unit (10) according to any one of the preceding claims,
wherein said thermal exchanger (42) comprises a fresh air entrance opening (44) and a fresh air exit opening (46) as well as an exhaust air entrance opening (48) and an exhaust exit opening (50), said water retention cavity (64) at least extending below the exhaust air exit opening (50) of the thermal exchanger (42) when the drainage collector (60) is fixed to either one of said main walls (22, 24).

10. Dual flow ventilation unit (10) according to any one of the preceding claims,
wherein at least one lateral wall (26) of the casing comprising an additional drainage collector (78) for collecting by gravity water generated by condensation on the thermal exchanger (42) and conducting said water outside the casing (12).

11. Dual flow ventilation unit according to claim 10, wherein said additional drainage collector (78) is formed by a drainage through-hole (80) within a lateral wall (26) facing exhaust air exit opening (50) of the thermal exchanger (42) to allow water generated by condensation onto the thermal exchanger (42) to flow by gravity through said drainage through-hole (80).

12. Dual flow ventilation unit according to any one of the preceding claims, wherein the drainage collector (60) is configured to be secured to said receiving slot (62) with one or more among: a screwing connection, a snap-fit connection or a close fit connection.

13. Method for installing a dual-flow ventilation unit (10) according to any one of the preceding claims in a building comprising an exhaust air circuit (34) and a fresh air circuit (40), comprising the steps of:
- determining the position of the exhaust (34) and fresh (40) air circuits,
- selecting one of the main walls (22, 24) of the casing (12) to be oriented downwards depending on the position of the exhaust (34) and fresh (40) air circuits,
- fixing the drainage collector (60) to the main wall (22, 24) selected to be oriented downwards.

14. Method according to claim 13, wherein the drainage collector (60) is already fixed to a main wall (22, 24) before the fixing step, said method comprising a step of removing the drainage collector (60) from said main wall (22, 24) before the fixing step.

## Patentansprüche

1. Doppelstrom-Lüftungseinheit (10) zum Absaugen von Abluft aus mindestens einem Raum und Blasen von Frischluft in den mindestens einen Raum, wobei die Doppelstrom-Lüftungseinheit (10) ein Gehäuse (12) aufweist, das zwei einander gegenüberliegende Hauptwände (22, 24) und mehrere Seitenwände (26, 28) umfasst, die sich zwischen den zwei Hauptwänden erstrecken, wobei das Gehäuse Folgendes umfasst:
- einen Wärmetauscher (42),
- einen ersten (17) und einen zweiten (21) Strömungskreislauf, die sich zumindest teilweise durch den Wärmetauscher (42) erstrecken, um Wärme von Luft, die durch einen des ersten (17) und zweiten (21) Strömungskreislaufs strömt, auf Luft zu übertragen, die durch den anderen des ersten (17) und zweiten (21) Strömungskreislaufs strömt, wobei sowohl der erste (17) als auch der zweite (21) Strömungskreislauf einen Lufteinlass und einen Luftauslass umfassen, die durch eine Seitenwand (28) der mehreren Seitenwände (26, 28) gebildet sind,
- Lüftungsmittel zum Bewegen von Luft durch den ersten und den zweiten Strömungskreislauf,
- einen Drainagesammler (60) zum Sammeln von durch Kondensation auf dem Wärmetauscher (42) erzeugtem Wasser durch Schwerkraft und Leiten des Wassers aus dem Gehäuse (12) heraus, wobei der Drainagesammler (60) entfernbar an einer der Hauptwände (22, 24) befestigt ist,
**dadurch gekennzeichnet, dass** jede der Hauptwände (22, 24) einen Aufnahmeschlitz (62) umfasst, der dazu ausgelegt ist, den Drainagesammler (60) aufzunehmen, so dass der Drainagesammler (60) dazu ausgelegt ist, in Abhängigkeit von der Ausrichtung des Gehäuses (12) selektiv an einer der Hauptwände (22, 24) befestigt zu werden.

2. Doppelstrom-Lüftungseinheit (10) nach Anspruch 1, wobei der Drainagesammler (60) eine Abdeckung ist, die zumindest einen Teil einer Außenfläche des Gehäuses (12) bildet, wenn sie in dem Aufnahmeschlitz (62) aufgenommen ist.

3. Doppelstrom-Lüftungseinheit (10) nach Anspruch 2, wobei jeder der Aufnahmeschlitze (62) ein Durchgangsloch (70) bildet, das dem Wärmetauscher (42) in einer Richtung senkrecht zu den Hauptwänden (22, 24) zugewandt ist, wobei der Drainagesammler (60) innerhalb des Durchgangslochs (70) angeordnet ist, wenn er in dem Aufnahmeschlitz (62) aufgenommen ist, wobei das Durchgangsloch (70) Abmessungen aufweist, die ermöglichen, dass der Wärmetauscher (42) durch das Durchgangsloch (70) entfernt wird.

4. Doppelstrom-Lüftungseinheit (10) nach einem der vorhergehenden Ansprüche, wobei der Drainagesammler (60) einen Wasserrückhaltehohlraum (64) umfasst, der sich unterhalb des Wärmetauschers (42) erstreckt, wenn das Gehäuse (12) mit dem Drainagesammler (60) nach unten ausgerichtet ist, wobei der Drainagesammler (60) ferner einen Drainagekanal (66) umfasst, der sich entlang der Hauptwand (22, 24) erstreckt, auf der der Drainagesammler (60) befestigt ist, und in Fluidverbindung mit dem Wasserrückhaltehohlraum (64) steht, um Wasser in die Nähe einer Seitenwand (26) des Gehäuses (12) zu leiten.

5. Doppelstrom-Lüftungseinheit (10) nach Anspruch 4, wobei jede der Hauptwände (22, 24) einen Kanalabdruck (68) umfasst, um den Drainagekanal (66) aufzunehmen, wenn der Drainagesammler (60) innerhalb des Aufnahmeschlitzes (62) aufgenommen ist, wobei sich der Kanalabdruck (68) von einem zentralen Abschnitt des Gehäuses (12) zu einer Seitenwand (26) des Gehäuses hin erstreckt.

6. Doppelstrom-Lüftungseinheit (10) nach einem der vorhergehenden Ansprüche, wobei der Drainagesammler (60) eine Innenfläche (74) in Kontakt mit dem Wärmetauscher (42) umfasst, um ein Widerlager für den Wärmetauscher (42) zu bilden, wenn der Drainagesammler (60) innerhalb des Aufnahmeschlitzes (62) aufgenommen ist.

7. Doppelstrom-Lüftungseinheit nach Anspruch 6, wobei der Drainagesammler Luft- und Wasserdichtungsmittel (76) zwischen der Innenfläche (74) des Drainagesammlers (60) und dem Wärmetauscher (42) umfasst.

8. Doppelstrom-Lüftungssystem nach Anspruch 6 oder 7 in Kombination mit Anspruch 3, wobei der Drainagesammler (60) Luftdichtungsmittel (77) umfasst, die sich um das Durchgangsloch (70) herum erstrecken, wenn der Drainagesammler innerhalb des Aufnahmeschlitzes aufgenommen ist.

9. Doppelstrom-Lüftungseinheit (10) nach einem der vorhergehenden Ansprüche, wobei der Wärmetauscher (42) eine Frischlufteintrittsöffnung (44) und eine Frischluftaustrittsöffnung (46) sowie eine Ablufteintrittsöffnung (48) und eine Abluftaustrittsöffnung (50) umfasst, wobei sich der Wasserrückhaltehohlraum (64) zumindest unterhalb der Abluftaustrittsöffnung (50) des Wärmetauschers (42) erstreckt, wenn der Drainagesammler (60) an einer der Hauptwände (22, 24) befestigt ist.

10. Doppelstrom-Lüftungseinheit (10) nach einem der vorhergehenden Ansprüche, wobei mindestens eine Seitenwand (26) des Gehäuses einen zusätzlichen Drainagesammler (78) zum Sammeln von durch Kondensation auf dem Wärmetauscher (42) erzeugtem Wasser durch Schwerkraft und Leiten des Wassers aus dem Gehäuse (12) umfasst.

11. Doppelstrom-Lüftungseinheit nach Anspruch 10, wobei der zusätzliche Drainagesammler (78) durch ein Drainagedurchgangsloch (80) innerhalb einer der Abluftaustrittsöffnung (50) des Wärmetauschers (42) zugewandten Seitenwand (26) gebildet ist, um zu ermöglichen, dass durch Kondensation auf dem Wärmetauscher (42) erzeugtes Wasser durch Schwerkraft durch das Drainagedurchgangsloch (80) strömt.

12. Doppelstrom-Lüftungseinheit nach einem der vorhergehenden Ansprüche, wobei der Drainagesammler (60) dazu ausgelegt ist, an dem Aufnahmeschlitz (62) mit einer oder mehreren von Folgenden befestigt zu sein: einer Schraubverbindung, einer Schnappverbindung oder einer engen Passverbindung.

13. Verfahren zum Installieren einer Doppelstrom-Lüftungseinheit (10) nach einem der vorhergehenden Ansprüche in einem Gebäude, das einen Abluftkreislauf (34) und einen Frischluftkreislauf (40) umfasst, umfassend die folgenden Schritte:
- Bestimmen der Position des Abluft- (34) und Frischluftkreislaufs (40),
- Auswählen einer der Hauptwände (22, 24) des Gehäuses (12), die in Abhängigkeit von der Position des Abluft-(34) und des Frischluftkreislaufs (40) nach unten ausgerichtet werden soll,
- Befestigen des Drainagesammlers (60) an der Hauptwand (22, 24), die dazu ausgewählt wurde, nach unten ausgerichtet zu werden.

14. Verfahren nach Anspruch 13, wobei der Drainagesammler (60) bereits vor dem Befestigungsschritt an einer Hauptwand (22, 24) befestigt wird, wobei das Verfahren einen Schritt eines Entfernens des Drainagesammlers (60) von der Hauptwand (22, 24) vor dem Befestigungsschritt umfasst.

## Revendications

1. Unité de ventilation à double flux (10) pour extraire de l'air d'évacuation d'au moins une pièce et souffler de l'air frais dans ladite au moins une pièce, ladite unité de ventilation à double flux (10) ayant un boîtier (12) comprenant deux parois principales (22, 24) opposées l'une à l'autre et une pluralité de parois latérales (26, 28) s'étendant entre lesdites deux parois principales, ledit boîtier comprenant :
- un échangeur thermique (42),
- un premier (17) et un deuxième (21) circuits de flux s'étendant au moins partiellement à travers l'échangeur thermique (42) pour transférer de la chaleur provenant de l'air circulant à travers l'un desdits premier (17) et deuxième (21) circuits de flux à l'air circulant à travers l'autre parmi lesdits premier (17) et deuxième (21) circuits de flux, chacun des premier (17) et deuxième (21) circuits de flux comprenant une admission d'air et un orifice de sortie d'air formés à travers une paroi latérale (28) parmi la pluralité de parois latérales (26, 28),
- des moyens de ventilation pour déplacer de l'air à travers lesdits premier et deuxième circuits de flux,
- un collecteur de drainage (60) pour collecter par gravité de l'eau générée par condensation sur l'échangeur thermique (42) et conduire ladite eau à l'extérieur du boîtier (12), ledit collecteur de drainage (60) étant fixé de manière à pouvoir être retiré à l'une parmi lesdites parois principales (22, 24),
**caractérisée en ce que** chacune desdites parois principales (22, 24) comprend une fente de réception (62) configurée pour recevoir ledit collecteur de drainage (60) de sorte que ledit collecteur de drainage (60) soit configuré pour être sélectivement fixé à l'une ou l'autre desdites parois principales (22, 24) en fonction de l'orientation du boîtier (12).

2. Unité de ventilation à double flux (10) selon la revendication 1, dans laquelle ledit collecteur de drainage (60) est un couvercle formant au moins une partie d'une surface externe du boîtier (12) lorsque reçu dans ladite fente de réception (62).

3. Unité de ventilation à double flux (10) selon la revendication 2, dans laquelle chacune desdites fentes de réception (62) forme un trou traversant (70) tourné vers ledit échangeur thermique (42) dans une direction perpendiculaire auxdites parois principales (22, 24), ledit collecteur de drainage (60) étant disposé à l'intérieur dudit trou traversant (70) lorsqu'il est reçu dans ladite fente de réception (62), ledit trou traversant (70) ayant des dimensions permettant à l'échangeur thermique (42) d'être retiré à travers ledit trou traversant (70).

4. Unité de ventilation à double flux (10) selon l'une quelconque des revendications précédentes, dans laquelle ledit collecteur de drainage (60) comprend une cavité de rétention d'eau (64) s'étendant sous l'échangeur thermique (42) lorsque le boîtier (12) est orienté avec le collecteur de drainage (60) tourné vers le bas, le collecteur de drainage (60) comprenant en outre un conduit de drainage (66) s'étendant le long de la paroi principale (22, 24) sur lequel le collecteur de drainage (60) est fixé et est en communication fluidique avec la cavité de rétention d'eau (64) pour conduire de l'eau à proximité d'une paroi latérale (26) du boîtier (12).

5. Unité de ventilation à double flux (10) selon la revendication 4, dans laquelle chacune desdites parois principales (22, 24) comprend une empreinte de conduit (68) pour recevoir ledit conduit de drainage (66) lorsque ledit collecteur de drainage (60) est reçu à l'intérieur de ladite fente de réception (62), ladite empreinte de conduit (68) s'étendant depuis une portion centrale du boîtier (12) vers une paroi latérale (26) du boîtier.

6. Unité de ventilation à double flux (10) selon l'une quelconque des revendications précédentes, dans laquelle ledit collecteur de drainage (60) comprend une surface interne (74) en contact avec ledit échangeur thermique (42) pour former une butée pour ledit échangeur thermique (42) lorsque ledit collecteur de drainage (60) est reçu à l'intérieur de ladite fente de réception (62).

7. Unité de ventilation à double flux selon la revendication 6, dans laquelle ledit collecteur de drainage comprend des moyens d'étanchéité à l'air et à l'eau (76) entre ladite surface interne (74) du collecteur de drainage (60) et ledit échangeur thermique (42).

8. Système de ventilation à double flux selon la revendication 6 ou la revendication 7 en combinaison avec la revendication 3, dans lequel ledit collecteur de drainage (60) comprend des moyens d'étanchéité à l'air (77) s'étendant autour du trou traversant (70) lorsque ledit collecteur de drainage est reçu à l'intérieur de la fente de réception.

9. Unité de ventilation à double flux (10) selon l'une quelconque des revendications précédentes, dans laquelle ledit échangeur thermique (42) comprend une ouverture d'entrée d'air frais (44) et une ouverture de sortie d'air frais (46) ainsi qu'une ouverture d'entrée d'air d'évacuation (48) et une ouverture de sortie d'évacuation (50), ladite cavité de rétention d'eau (64) au moins s'étendant sous l'ouverture de sortie d'air d'évacuation (50) de l'échangeur thermique (42) lorsque le collecteur de drainage (60) est fixé à l'une ou l'autre desdites parois principales (22, 24).

10. Unité de ventilation à double flux (10) selon l'une quelconque des revendications précédentes, dans laquelle au moins une paroi latérale (26) du boîtier comprend un collecteur de drainage supplémentaire (78) pour collecter par gravité de l'eau générée par condensation sur l'échangeur thermique (42) et conduire ladite eau à l'extérieur du boîtier (12).

11. Unité de ventilation à double flux selon la revendication 10, dans laquelle ledit collecteur de drainage supplémentaire (78) est formé par un trou traversant de drainage (80) à l'intérieur d'une ouverture de sortie d'air d'évacuation (50) tournée vers la paroi latérale (26) de l'échangeur thermique (42) pour permettre à de l'eau générée par condensation sur l'échangeur thermique (42) de circuler par gravité à travers ledit trou traversant de drainage (80).

12. Unité de ventilation à double flux selon l'une quelconque des revendications précédentes, dans laquelle le collecteur de drainage (60) est configuré pour être assujetti à ladite fente de réception (62) avec un ou plusieurs raccordements parmi : un raccordement par vissage, un raccordement par encliquetage ou un raccordement par ajustement serré.

13. Procédé d'installation d'une unité de ventilation à double flux (10) selon l'une quelconque des revendications précédentes dans un bâtiment comprenant un circuit d'air d'évacuation (34) et un circuit d'air frais (40), comprenant les étapes consistant à :
- déterminer la position des circuits d'air d'évacuation (34) et d'air frais (40),
- sélectionner l'une des parois principales (22, 24) du boîtier (12) à orienter vers le bas en fonction de la position des circuits d'air d'évacuation (34) et d'air frais (40),
- fixer le collecteur de drainage (60) sur la paroi principale (22, 24) sélectionnée pour être orientée vers le bas.

14. Procédé selon la revendication 13, dans lequel le collecteur de drainage (60) est déjà fixé à une paroi principale (22, 24) avant l'étape de fixation, ledit procédé comprenant une étape consistant à retirer le collecteur de drainage (60) de ladite paroi principale (22, 24) avant l'étape de fixation.
